# EUROPEAN PATENT APPLICATION

(11) **EP 1 020 863 A2**
(43) Date of publication of application: **19.07.2000**
(21) Application number: 00300013.0
(22) Date of filing: 05.01.2000
(51) Int. Cl.: G11B 33/10

(54) **Assemblable storage and display unit**

(30) Priority: 06.01.1999 US 226461
(71) Applicant: SUNHING MILLENNIUM LIMITED, Kowloon, Hong Kong (HK)
(72) Inventor: Mok, Sze Man, 1-2 St. Stephen's Lane, Midlevels (HK)
(74) Representative: Votier, Sidney David

(57) **Abstract**

An assemblable storage unit (1) for retaining a plurality of at least one kind of storage media (3) comprising horizontally spaced upwardly supportable members (5, 6), a plurality of elongate members (4) positioned dependent from the spaced upwardly supportable members (5, 6) and capable of being configured as separate horizontal arrays (S) of two or three elongate members, wherein at least one said array if of two elongate members (S², S^{2'}) they can be configured to allow the storage media to bear onto it or to suspended from it and/or if of three elongate members (S³) they can be configured to allow the storage media (3) to be in a first orientation or second orientation when placed to bear onto said three elongate members (S³).

## Description

The present invention relates to an assemblable storage unit for retaining a plurality of at least one kind of storage media. In particular although not solely the present invention relates to an assemblable storage unit capable of storing at least one of a plurality of CDs, video cassettes, audio cassettes or the like.

Storage units for retaining a plurality of storage media are well known. With the development of alternative storage media there has been a development of storage units designed for the retaining of such newly developed articles. Often such storage units are also adapted to allow the suitable display of the storage media which are retained.

Nevertheless such storage units normally provide set regions to retain only one kind of storage media. Such storage units are for example either a CD rack or a video cassette rack. They normally provide support regions which are in a fixed relation to the entire unit or they may provide a plurality of support regions which remain in a fixed relation to each other. An example of a storage unit wherein a plurality of support regions are provided in a fixed relationship are our own PENGUIN™ brand of storage units.

Such storage units have the disadvantage of providing for support regions which remain in a fixed relationship to each other and hence limit the adaptability of the storage unit to accommodate different types and different numbers of storage media.

Accordingly the object of the present invention is to provide an assemblable storage unit which will overcome the abovementioned disadvantages or which will at least provide the public with a useful choice.

Accordingly the present invention consists in an an assemblable storage unit for retaining a plurality of at least one kind of storage media comprising
a first upwardly supportable member,
a second upwardly supportable member, being so supportable whilst horizontally spaced from said first upwardly supportable member, and
a plurality of elongate members, each elongate member being capable of being positioned dependent from the spaced upwardly supportable members so as to extend at least in part therebetween,
characterised in that at least some of such elongate members can be positioned as separate reconfigurable substantially horizontal arrays of two or three elongate members,
and further characterised in that at least one said array
   (i) if of two elongate members, can be configured
      (a) to provide two point support to each of said at least one kind of storage media when placed to bear onto said two elongate member, or
      (b) to provide two point support to each of said at least one kind of storage media when suspended from said two elongate members
      and/or
   (ii) if of three elongate members, can be configured to provide three point support to each of said at least one kind of storage media in
      (c) a first orientation, when placed to bear onto and/or against said three elongate members, or
      (d) a second orientation, when placed to bear onto said three elongate members.

Preferably said first upwardly supportable member and said second upwardly supportable member are spaced from each other in a substantially parallel and upright condition, wherein a first edge of each of said first and second upwardly supportable members is at or towards a front region of said assemblable storage unit and a second edge of each of said first and second upwardly supportable members is at or towards a rear region of said assemblable storage unit.

Preferably one of said elongate members of each said array of either two or three elongate members is dependent from the spaced upwardly supportable members towards the front region of said assemblable storage unit and said other of said elongate member(s) is/are dependant from the spaced upwardly supportable members at or towards the rear region of said assemblable storage unit.

Preferably when at least one said arrays is of two elongate members to provide two point support to said at least one kind of storage media to bear onto said two elongate members,
said two elongate members are positioned from each other at a distance to correspond with two regions of said storage media to be supported, such regions being where stable support of said storage media is provided.

Preferably when said array is of two elongate members configured to provide two point support to each of said at least one kind of storage media when suspended from said two elongate members,
said two elongate members are displaced from each other at a distance suitable for stably supporting a suspendable storage media to provide two point support to said suspendable storage media when suspended from said two elongate members.

Preferably said two elongated members are positioned from each other at a distance to correspond with two suspension regions of said storage media to be suspended, such regions being where stable suspension of said storage media is attained.

Preferably said two regions of said storage media are reliefs formed inwardly from an edge of a substantially planar storage media containing pack, such reliefs providing hooking elements each capable of being hooked over a said elongate member of said two elongate members.

Preferably each of said first and second upwardly supportable members are provided at their lower most end with base elements to allow said assemblable storage media to be supported by a substantially horizontal surface.

Preferably said base elements are feet capable of providing stable support for said unit on said substantially horizontal surface.

Preferably said base elements are castors to provide stable but displaceable support of said assemblable storage unit on said substantially horizontal surface.

Preferably there are two pairs of castors a first pair placed at or adjacent the front region of said storage unit and a second pair placed at or adjacent at a rear region of said assemblable storage unit.

Preferably at least one of said pairs of castors is disposed from said assemblable storage unit to be displaced into at least two conditions to provide at least a first and second angular orientation of said first and second upwardly support able members in respect of said substantially horizonal surface.

Preferably said first upwardly supportable member and said second upwardly supportable member each comprise of
a forwardly disposed elongate member,
a rearwardly disposed elongate member,
at least one spacer element extending between said forwardly disposed elongate member and said rearwardly disposed elongate member of each upwardly supportable member to keep them in a spaced and fixed relationship to each other.

Preferably said spacer elements keep said forwardly disposed and rearwardly disposed elongate members in a substantially parallel condition to each other.

Preferably each of said forwardly disposed and rearwardly disposed elongate members of each of said first upwardly supportable member and of said second upwardly supportable member are extruded members each providing a plurality of indexing points to allow the selectable indexing of said elongate members to positions to depend therefrom in desirable locations.

Preferably when at least one of said arrays is of three elongate members configured to provide three point support to each of said at least one kind of storage media,
a first of said elongate members is located towards the front region of said storage unit positioned to correspond with a region of said storage media to bear thereon,
a second of said elongate member of said three elongate members located towards the rear region of said assemblable storage unit positioned to correspond with a region of said storage media to bear there against, and
an intermediate elongate member of said three elongate members is positioned to correspond with

(a) a region of said storage media to bear there on in a first orientation of said media or,
(b) a region of said storage media to bear there against in a second orientation of said media

Preferably said first upwardly supportable member and said second upwardly supportable member each have at least one region adapted to allow said assemblable storage unit to be secured to a substantially vertical surface.

Preferably said indexing points are an array of holes spaced between the distal end of said upright supporting means and are engageable by a securing means of said elongate members.

Preferably said array of holes are equi-spaced along a flange of each of the forwardly and rearwardly disposed elongate members of each of the elongate supporting members.

This invention may also be said broadly to consist in the parts, elements and features referred to or indicated in the specification of the application, individually or collectively, and any or all combinations of any two or more of said parts, elements or features, and where specific integers are mentioned herein which have known equivalents in the art to which this invention relates, such known equivalents are deemed to be incorporated herein as if individually set forth.

The invention consists in the foregoing and also envisages constructions of which the following gives examples.

One preferred form of the present invention will now be described with reference to the accompanying drawings in which;
Figure 1 is a front view of one example of a storage unit of the present invention,
Figure 2 is a rear view of one example of a storage unit of the present invention,
Figure 3 is a left side view of one example of a storage unit of the present invention,
Figure 4 is a right side view of one example of a storage unit of the present invention,
Figure 5 illustrates an example of a storage unit of the present invention wherein a mixed storage media has been stored in the unit, the upper most storage media being of a kind contained in a TELFI™ pack, the lower most being of VCR cassettes or packs and there between being of a CD type media in a commonly used substantially square CD casing,
Figure 6 shows an alternative configuration of the assemblable storage unit wherein two types of storage media are present but where the upper four rows are supported by a said storage unit on two elongate members and the next lower most storage media is supported by three elongate members,
Figure 7 illustrates a partial side view of a storage unit illustrating the two conditions of storage of a storage media supported by the three elongate members if possible,
Figure 8 is a exploded perspective view of part of an assemblable storage unit of the present invention wherein intermediate upright elongate members are shown wherein an array(s) comprising of three elongate members are present,
Figure 9 is a side view of a storage unit of the present invention wherein the storage unit is supported on castors,
Figures 10 is a side view of a storage unit of the present invention supported on castors but in a different configuration to provide an angular displacement from the vertical configuration as shown in Figure 9,
Figure 11 is a sectional view through a TELFI™ pack,
Figure 12 is a top view of the storage units as shown in Figures 1 - 4,

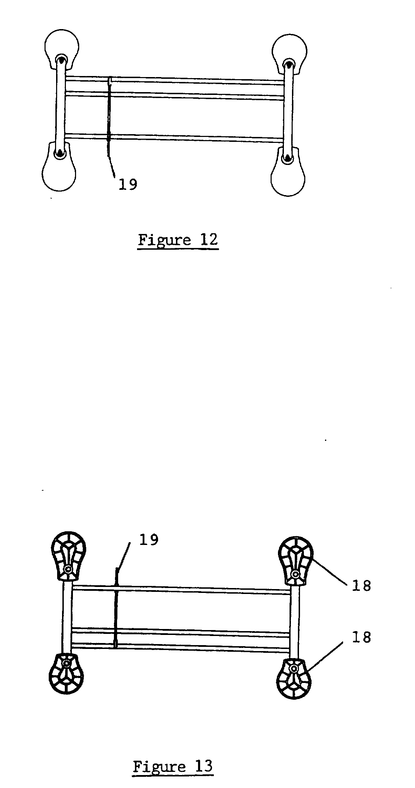

Figure 13 is a bottom view of the storage units as shown in Figures 1 - 4,
Figures 14, 15 and 16 are perspective views of an alternative form of the unit of the present invention, where the upwardly supportable members are each of an elongate planar member having the two arrays of indexing means preferably provided along the vertical edges thereof, and

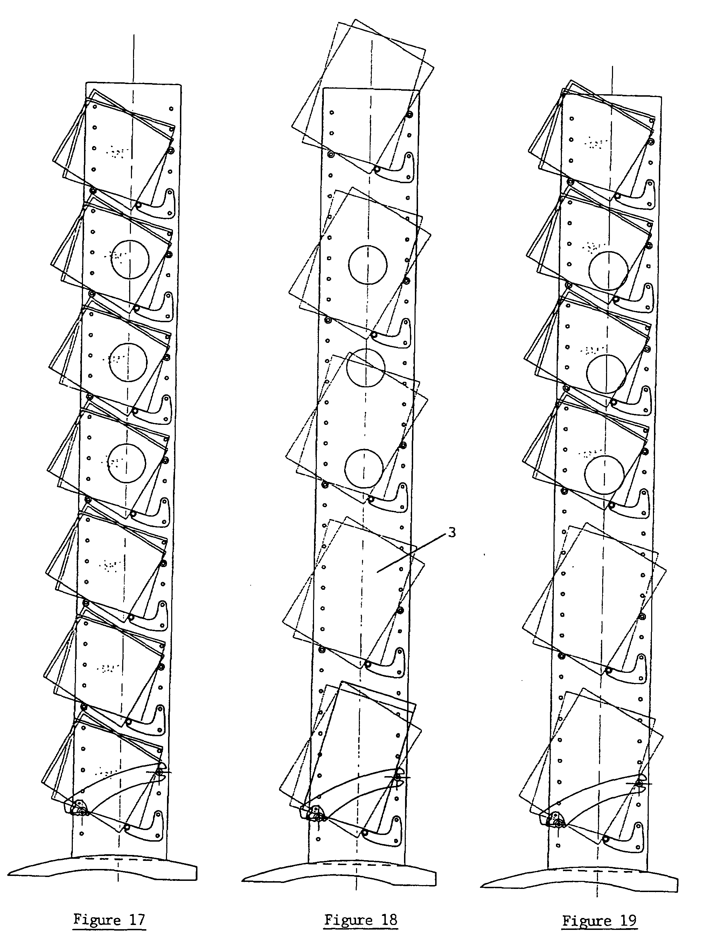

Figures 17,18 and 19 are side views of the storage units of a kind as shown in Figures 14, 15 or 16 illustrating the different kinds of media which may be stored therein.

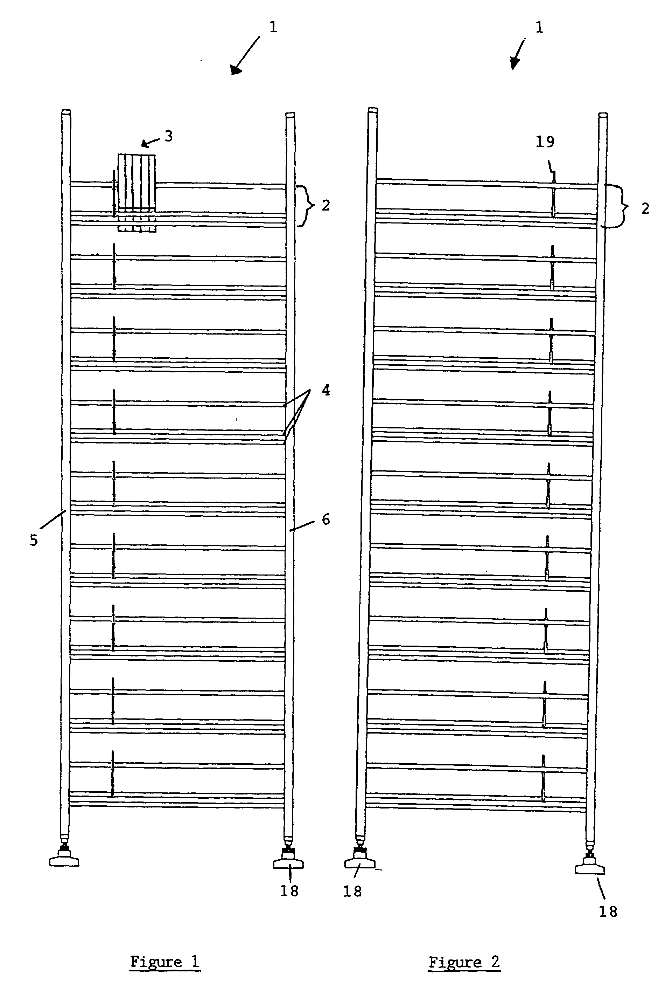

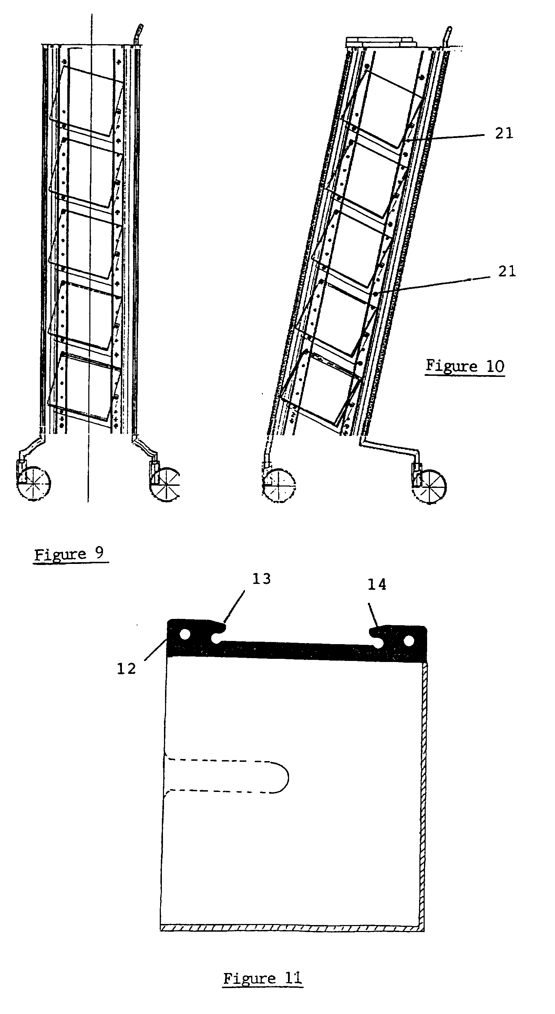

The assemblable storage unit of the present invention may take many forms and may have several options with respect to its support. The most preferred form of the present invention is shown in Figures 1-4 and one optional configuration is shown in Figures 9 and 10. In Figures 1-4 there is illustrated a storage unit which is supportable from a substantially horizontal surface by allowing the unit to be placed thereon. In Figures 9 and 10 the units are illustrated having castors to allow it to be displaceable on a substantially horizontal surface. Alternatives may include a wall mountable unit wherein suitable skewing regions are provided to allow to be mounted to a substantially vertical surface such as a wall, column or pillar or the like or indeed it may be a configuration where a closure means is provided such that it may be considered as a cabinet more than a storage unit as shown in the preferred form in the representations.

The assemblable storage unit of the present invention is adaptable in configuration to provide an adjustability in the supporting regions to allow the units to store different numbers and type of storage media. With reference to Figures 1 and 2 the assemblable storage unit 1 consists of support regions of a configuration which will allow the support of such storage media as compact disks, video cassettes or audio cassettes or the like.

It is to be appreciated that reference to storage media in the present specification may include the associated packaging or casing which is normally associated to protect the storage media. For example compact disks are normally contained in a square substantially flat hard plastics casing and the support regions 2 of the present invention are configured to allow the storage of compact disks either in its casing or without its casing being present. In the normal mode of use where the casing or packaging of the storage media are present, the storage unit of the present invention preferably provides a plurality of support regions 2 which may be of the same configuration or may be of a different configuration. The present invention allows for the storage units to be adaptable to provide a different configuration of support regions and where desirable to allow the unit to be variable in the number or type of media which are to be stored therein.

It will be appreciated that because of the different sizes of storage media or its packaging, the position and/or configuration of support regions of the unit are adjustable to take full advantage of space.

With reference to Figure 1 there is shown a plurality of storage media 3 supported on one of the support regions of the unit. The support regions are configured to support the storage media in a generally upright condition. Such general upright storage of the storage media allows for a plurality of storage media to be placed on a supporting region in a side by side relationship. In Figure 1 there is shown for example five compact disks placed in a side by side relationship on the uppermost storage region of the unit.

In the preferred form the support regions of the unit are a plurality of elongate members 4 which are each dependant from a first upwardly supportable member 5 and a second upwardly supportable member 6. The plurality of elongate members are reconfigurable and substantially provide a horizontal array of two or three elongate members. The arrays may be reconfigurable as a unit but preferably each of the elongate members of the arrays are separately reconfigurable.

It will be appreciated that where the elongate members are separately reconfigurable that a standard configuration for a particular storage media is preferred.

A single configuration for more than one kind of storage media may also be appropriate. Nevertheless the separately re-configurable nature of the elongate members allows for an array to be adjusted both in configuration and in respect of its dependant positioning from the upright members.

In the preferred substantially rectangular box shaped configuration of the storage unit, the forward region may be considered the region where a suitable access or display of the media to be stored in the unit is provided and the rear is considered the opposite face thereto. The front face of the unit is preferably that face where the storage media is displayed with its spine of its packaging or casing presented to be easily viewed by a user of the unit.

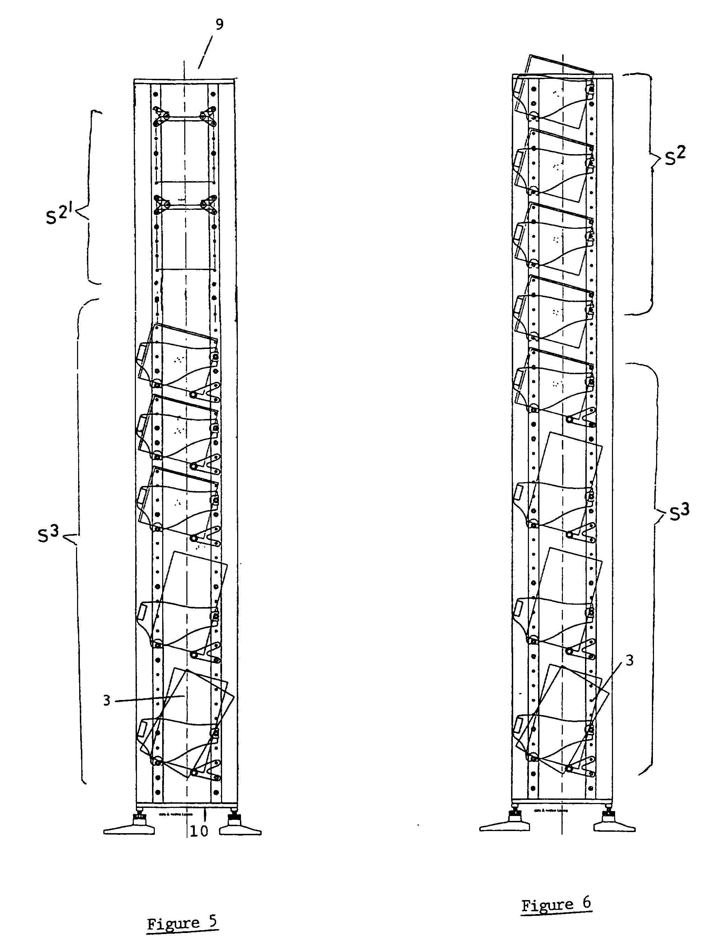

With reference to Figures 5 and 6 which are a side view of a preferred form of the storage unit of the present invention, there is shown various different kinds of storage media which are supported by a plurality of support regions. In the preferred form the support regions are an array of two or of three elongate members. The elongate members are preferably substantially horizontal and parallel rods 8 which are so spaced to provide a two or three point support to the storage media which it is to receive. It will be appreciated that a three point support provided by the arrays of three elongate members provides more rigid support to, for example compact disks or video cassettes than a two point support which is provided by the arrays of two elongate members. However a two point support provided by arrays of two elongate members may be preferred in certain circumstances.

The arrays of three elongate members each preferably consist of a forwardly disposed rod 8^{F} a rearwardly disposed rod 8^{R} and an intermediate rod 8^{l}.

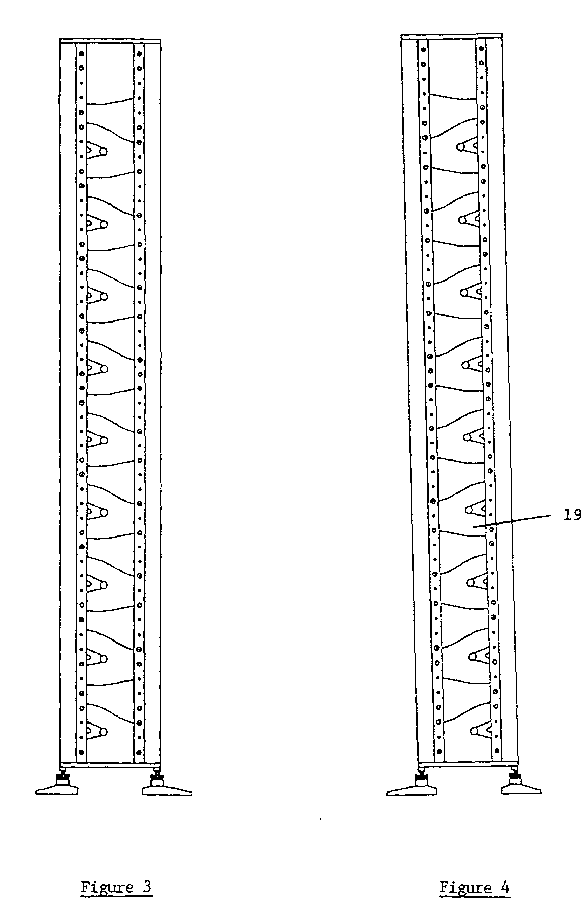

The rods 8 are preferably disposed from the upwardly supportable members 5, 6 and are indexable thereto to allow relocation, if necessary, to a suitable configuration so as to allow different storage media to be supported thereon. With reference to Figures 3 and 4 the upwardly supported members 5, 6 are preferably of a substantially rectangular outline shape.

In the preferred form the first and second upwardly supportable members 5, 6 are spaced parallel to each other in a substantially upright condition such spacing being achieved either by the rods 8 or by upper and/or lower spacers members. However in the preferred form the substantially parallel spacing between the first and second upright members is achieved by the rods 8 and no spacers are present.

In the preferred form each of the first and second upwardly supportable members 5, 6 consist of a forwardly disposed elongate member 5^{F}, 6^{F} and a rearwardly disposed elongate member 5^{R}, 6^{R}. The forwardly and rearwardly disposed elongate members are preferably extruded and are preferably extruded aluminium members. Each of the forwardly disposed elongate member and rearwardly disposed elongate member of each first and second upwardly supportable members are preferably connected at their upper and lower distal ends by a connection member 9, 10. Such connection members preferably provide stable connection between the forwardly and rearwardly disposed elongate members and preferably in a condition such that they are substantially parallel. Preferably the connection members 9,10 are secured to the distal ends of the forwardly and rearwardly disposed elongate members of each upwardly supportable member by a fastening means such as a machine screw or like threaded fastening means.

Although in the preferred form the upwardly supportable members consist of forwardly and rearwardly disposed elongate members, it must be appreciated that each of the upwardly supportable members may consist of a substantially planar rectangular member having a forwardly disposed substantially upright edge and a rearwardly disposed substantially upright edge.

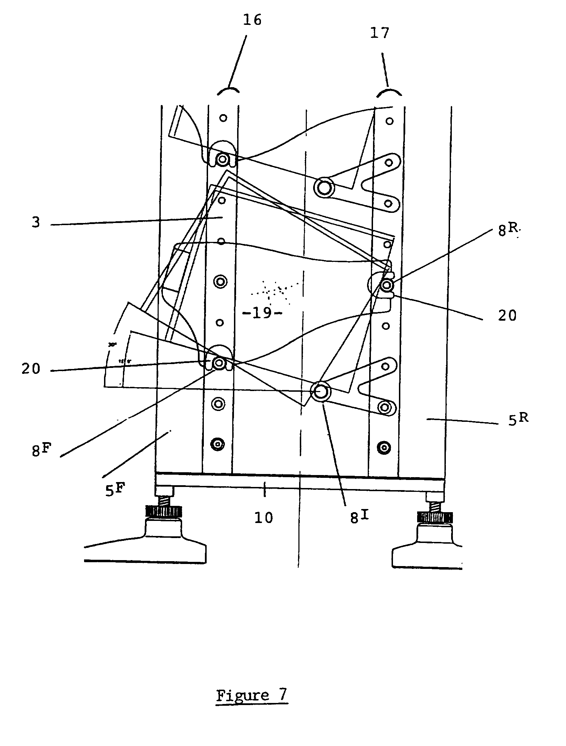

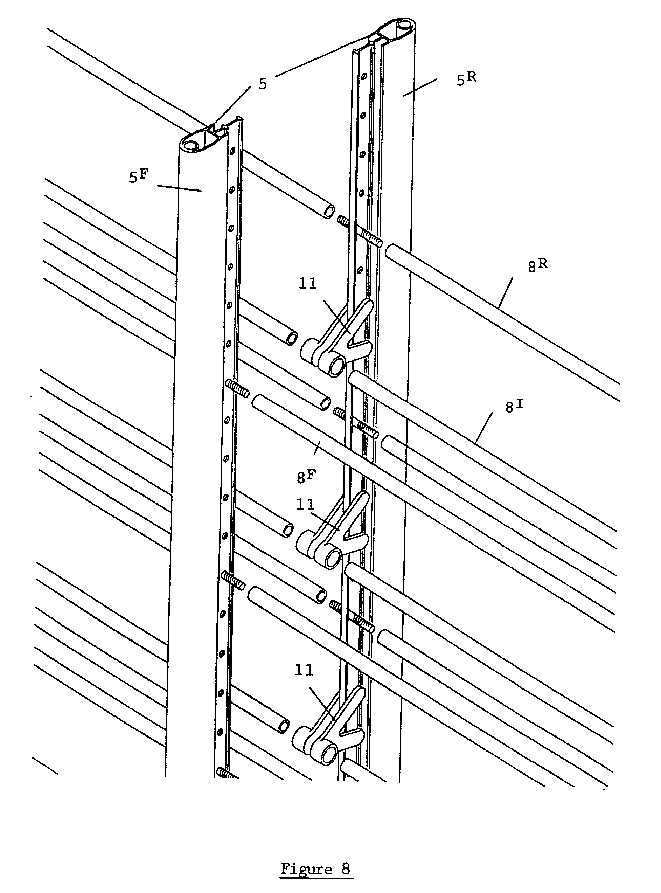

The support regions providing three elongate members per array have the forwardly disposed rod 8^{F} substantially towards the forward upright edge (or substantially at the forwardly disposed elongate member 5^{F}, 6^{F}) and the rearwardly disposed rod 8^{R} at or towards a rear substantially upright edge (or at or towards the rearwardly disposed elongate member 5^{R}, 6^{R}). As can be seen with reference to Figure 8 the forwardly disposed rod 8^{F} and rearwardly disposed rod 8^{R} are preferably securable to the forwardly disposed elongate member 5^{F} and rearwardly disposed elongate member 5^{R} respectively. The intermediate rod 8^{l} may be considered to be positioned intermediate of the rods 8^{F} and 8^{R}. With reference to the figures in the present specification the intermediate rod 8^{l} is preferably disposed for the rearwardly disposed elongate member 5^{R}, 6^{R}. In particular with reference to Figure 7 it can be seen that rod 8^{l} lies intermediate of the vertical array of indexing points of the rods 8^{F} and 8^{R} and is preferably dependant from the rearwardly disposed elongate member 5^{R}.

The positioning of the spacial relationship of the rods is such as to provide a three or two point support to the storage media to thereby provide stable support. Such stable support is achieved by providing three or two rods onto or against which the storage media can bear.

Of course the spacial relationship must take into consideration the different shape and size of different kinds of storage media and therefore a spacing of rods which is too great may not provide the two or three point support desirable for a particular storage media. From a preferred form as shown in Figure 7 the rods are preferably at an apex of a triangle formed between the rods when viewed in an axial direction. The rod 8^{l} may be dependant from the rearwardly disposed elongate member or the forwardly disposed elongate member. It is preferably located (in a horizontal aspect), lower than the forwardly disposed rod 8^{F} which is preferably disposed lower than the rearwardly disposed rod 8^{R}. This preferred configuration allows for a storage media to be supported and to allow its display from the forwardly disposed region of the unit. In for example the storage of compact disks which are normally enclosed in a substantially square and flat casing, indicia such as text is normally presented along the spine of the casing. This indicia is desirably displayable at a suitable angle to the user of the unit. Therefore the preferred configuration as shown in Figure 8 allows for the spine and hence the indicia to be viewed by a user who is generally positioned towards and facing downwardly onto the storage media.

As can be seen in Figure 7, the arrays of three elongate members are disposed from the first and second upwardly supportable members in a configuration to allow the storage of the storage media in two different conditions. The conditions provide a different angle of orientation to the media allow for the spine to be presented at different orientations to the vertical. In the preferred form and as shown in the geometry in Figure 7 the orientation can vary between 15 and 30 degrees. The two conditions of display allow for the media on the lowermost arrays to be positioned at for example the 30 degree angle and of the more higher arrays to be at a 15 degree angle to allow the indicia to be displayed at suitable orientations to the user. There may of course be other reasons for displaying the media at a particular orientation and of course it may also be a personal preference of the user to display them in one or another orientation. In a first condition where in for example the orientation is at 15 degrees the storage media bears onto both the forwardly disposed and intermediate rods and against the rearwardly disposed rod. Where for example the orientation is at 30 degrees the storage media bears onto the forwardly disposed rod and against the intermediate and rearwardly disposed rod. In both orientations suitable stable support is provided for the storage media.

In the preferred form the forwardly and rearwardly disposed rods are secured to the upright supportable members by threaded means as shown in Figure 8. The intermediate rod 8^{l} is preferably dependant from the rearwardly disposed elongate member of each of the first and second upwardly supportable members by a bracket 11 which is secured to the rearwardly disposed elongate member by protruding pins from the extrusion. The intermediate rod 8^{l} is secured to the bracket 11^{l} by simply inserting into the bracket ring.

The supporting regions of the present invention may in addition or alteratively also comprise of arrays of two elongate members. In Figure 6 such support regions are designated S². Such support regions provide a two point support to each of the storage media which are supported thereon. It will be appreciated that such support does not allow for a dual orientation capability as per the arrays of three elongate members.

Furthermore the storage unit of the present invention can provide supporting regions for the support of TELFI™ packs which in example are shown in Figure 11. The TELFI™ pack is a flexible plastic pocket into which one or two compact disk or compact disk Roms can be inserted to provide it with some measure of protection. As can be seen the TELFI™ pocket has a supporting regions 12 which consists of two hooking regions 13, 14 which allow the pocket to be releasably secured to hooks or hook like providing members by engaging the hooking regions 13, 14 therewith. The application of the TELFI™ pocket in respect of the present invention allows for it to be suspended from an array of two elongate members. Each of the elongate members of the array may extend through the hooking regions 13, 14 of the TELFI™ pocket. As shown in Figure 5, there are two arrays of two elongate members S², wherein TELFI™ pockets are suspended. Preferably the configuration of two rods in the array is substantially parallel in the same general horizontal plane. Of course it is envisaged that such suspension need not necessarily be by rods in substantially the same horizontal plane. However the spacing of the forwardly disposed and rearwardly disposed elongate members and particularly the spacing of array of indexing regions along the upright edges of the supporting means 5, 6 is such that an array of two elongate members provided on the same general horizontal plane can provide support to a TELFI™ pocket and at the same time also provide a suitable configuration of elongate members for supporting other forms of storage media such as compact disks or video cassettes. The indexing regions of each of the forwardly and rearwardly disposed elongate members of each of the supporting means are preferably provided at a substantially regular interval between its distal ends. In the preferred form such an interval is 32cm however greater or smaller distances may also be suitable.

The indexing regions are preferably apertures or at least reliefs in the upwardly supportable members. In the preferred form they are holes of a suitable size to receive either the rods or receive fastening means to secure the rods (11 of the present invention).

The upwardly supportable members are provided with the two arrays of indexing regions positioned such as to allow the unit to provide the reconfigurable support of the arrays of elongate members to the storage media in the 2 or 3 point support as herein described. The present invention is adapted such that there is no need to provide a third array of indexing regions to accommodate the configurations of the unit as herein described.

Preferably each array on both the forwardly and rearwardly disposed elongate members are provided so that they are horizontally in line. Alternatively however there may be an offset between the indexing points of each array of the forwardly and rearwardly disposed elongate members. In a preferred form the distance between the arrays of indexing regions of the forwardly disposed elongate member and the rearwardly disposed elongate member is 128cm this distance being defined and maintained by the spacer elements 9,10. This distance determines the horizontal distance between the forwardly and rearwardly disposed rods 8^{F}, 8^{R}. In the configuration where three elongate members per array are present, the intermediate rod 8^{l} is preferably located from the rearwardly disposed elongate member 5^{R} at a horizontal distance of 49cm. In the three rod configuration and taking rod 8^{l} as the vertical origin, rod 8^{F} is displaced from the vertical origin by 20.5cm and rod 8^{R} is displaced from the vertical origin by 84.5cm. In this configuration the rods are positioned for suitable storage and display in both the first and second orientations (30 and 15 degrees) of compact disks and VCR cassettes. The horizontal distance between the array of indexing means 16, 17 in this configuration also provides for suitable displacement of the two rod configuration for the support of TELFI™ packs. The vertical distance between arrays of elongate members can be adjusted to provide efficient space usage.

The present invention can be adapted to provide a plurality of adjacent assemblable storage units. As shown in Figure 8 the upwardly supportable members may be a plurality of elongate members dependant from both sides.

In the preferred form the unit is able to be supported on a substantially horizontal supporting surface such as the ground or floor and hence the upwardly supportable members are provided with feet like members 18. Such feet like members are preferably height adjustable to allow their height to be changed so that each of the feet have adequate contact with the supporting surface (ie to prevent the surface from rocking).

In the version of the storage unit as shown in Figures 9 and 10 the feet may be replaced by castors to allow the unit to be displaced along a substantially horizontal surface. The castors may also be provided with a height adjustment to provide floor point contact of the castors with the floor but also to provide an adjustability in the vertical orientation of the unit. As shown in Figure 10 the castors may be of a configuration to provide a slight incline to the unit.

Various different sizes of storage units of the present invention may be catered for by either the provision of longer elongate support members and/or the provision of longer elongate members.

Where stored media on the supporting means does not extend the full width of the unit, there is preferably provided a divider 19 which is slidably moveable along the rods 8 to bear against the exposed storage media to provide it with some measure of vertical support. The divider is preferably provided with rubber like grips 20 which are of a shape to engage about at least part of at least two of the rods of each array. The rubber grips provide some resistance to sliding motion of the divider along the rods. In the preferred form the divider is provided with rod engageable regions to engage with the forwardly disposed and rearwardly disposed rods 8. It may however also be provided with engagement regions to engage the intermediate rod 8^{l}. Indeed each array of elongate members may be provided with more than one divider. The engagement regions of the divider are preferably reliefs extending inward from a perimeter region thereof. Alternatively they may be apertures through the divider which provides the rod engagement regions. However if apertures are used it could be more difficult for a divider to be removed from the unit which in certain circumstances may be desirable (when for example a full row of storage media is provided and hence the divider is not required).

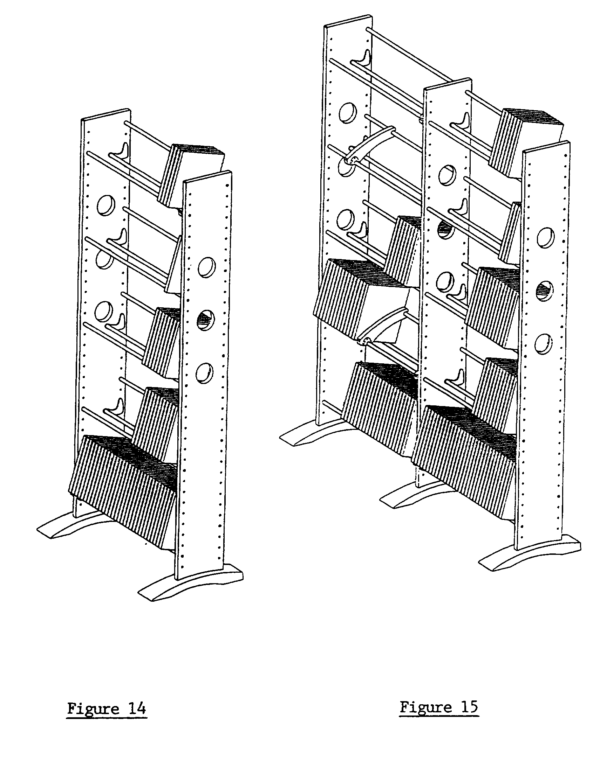

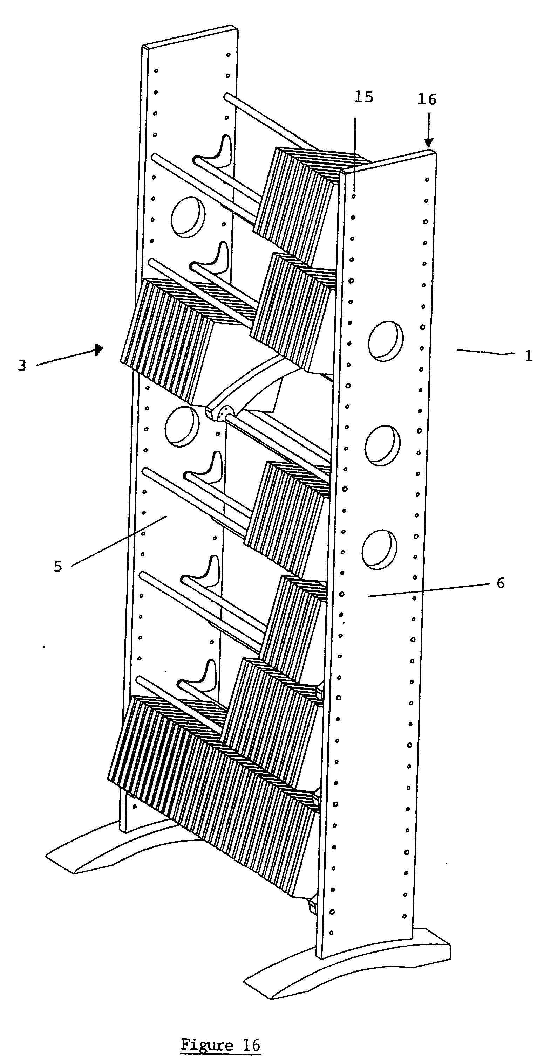

Figures 14-16 are perspective views of an alternative form of the unit of the present invention. Two arrays of securing regions 15,16 (preferably an array of apertures such as holes) are provided. In this alternative the supportable members 5,6 are elongate planar members such as a suitable hardboard of fibreboard or similar. The securing regions are preferably provided along the forward and rearwardly disposed vertical edges of the supportable members. This alternative form of the invention also illustrates alternative feat like members 18 and a variation on the shape of the bracket 11 and divider.

Further features of the invention may include a protective covering to cover at least the outer exposed regions of the first and second upwardly supportable members for aesthetic purposes. The cover is preferably removable so as to allow for access to the engagement regions of the rods for repositioning or for the expansion of the assemblable storage unit by its engagement with an adjacent like assemblable storage unit. In the version of the invention which provides a cabinet assemblable storage unit exterior cladding may be attached to the holes of the forwardly and/or rearwardly disposed elongate members of the first and second upright supportable members. Closure means such as doors on hinges or the like may be provided on the forwardly facing region of the unit and it may also be optionally provided with rearwardly disposed cladding.

Both the cabinet or open version of the storage unit of the present invention may be provided in a wall mountable version.

It will be appreciate by a person skilled in the art that further alternative configurations of the storage unit of the present invention may be viable.

## Claims

1. An assemblable storage unit for retaining a plurality of at least one kind of storage media comprising
a first upwardly supportable member,
a second upwardly supportable member, being so supportable whilst horizontally spaced from said first upwardly supportable member, and
a plurality of elongate members, each elongate member being capable of being positioned dependent from the spaced upwardly supportable members so as to extend at least in part therebetween,
characterised in that at least some of such elongate members can be positioned as separate reconfigurable substantially horizontal arrays of two or three elongate members,
and further characterised in that at least one said array
(i) if of two elongate members, can be configured
(a) to provide two point support to each of said at least one kind of storage media when placed to bear onto said two elongate member, or
(b) to provide two point support to each of said at least one kind of storage media when suspended from said two elongate members
and/or
(ii) if of three elongate members, can be configured to provide three point support to each of said at least one kind of storage media in
(c) a first orientation, when placed to bear onto and/or against said three elongate members, or
(d) a second orientation, when placed to bear onto said three elongate members.

2. An assemblable storage unit as claimed in claim 1 wherein said first upwardly supportable member and said second upwardly supportable member are spaced from each other in a substantially parallel and upright condition, wherein a first edge of each of said first and second upwardly supportable members is at or towards a front region of said assemblable storage unit and a second edge of each of said first and second upwardly supportable members is at or towards a rear region of said assemblable storage unit.

3. An assemblable storage unit as claimed in claim 2 wherein one of said elongate members of each said array of either two or three elongate members is dependent from the spaced upwardly supportable members towards the front region of said assemblable storage unit and said other of said elongate member(s) is/are dependant form the spaced
upwardly supportable members at or towards the rear region of said assemblable storage unit.

4. An assemblable storage unit as claimed in claim 1 wherein when at least one said arrays is of two elongate members to provide two point support to said at least one kind of storage media to bear onto said two elongate members,
said two elongate members are positioned from each other at a distance to correspond with two regions of said storage media to be supported, such regions being where stable support of said storage media is provided.

5. An assemblable storage unit as claimed in claim 1 wherein when said array is of two elongate members configured to provide two point support to each of said at least one kind of storage media when suspended from said two elongate members,
said two elongate members are displaced from each other at a distance suitable for stably supporting a suspendable storage media to provide two point support to said suspendable storage media when suspended from said two elongate members.

6. An assemblable storage unit as claimed in claim 5 wherein said two elongated members are positioned from each other at a distance to correspond with two suspension regions of said storage media to be suspended, such regions being where stable suspension of said storage media is attained.

7. An assemblable storage unit as claimed in claim 6 wherein said two regions of said storage media are reliefs formed inwardly from an edge of a substantially planar storage media containing pack, such reliefs providing hooking elements each capable of being hooked over a said elongate member of said two elongate members.

8. A assemblable storage unit as claimed in claim 1 wherein each of said first and second upwardly supportable members are provided at their lower most end with base elements to allow said assemblable storage media to be supported by a substantially horizontal surface.

9. An assemblable storage unit as claimed in claim 6 wherein said base elements are feet capable of providing stable support for said unit on said substantially horizontal surface.

10. An assemblable storage unit as claimed in claim 6 wherein said base elements are castors to provide stable but displaceable support of said assemblable storage unit on said substantially horizonal surface.

11. An assemblable storage unit as claimed in claim 10 wherein there are two pairs of castors a first pair placed at or adjacent the front region of said storage unit and a second pair placed at or adjacent at a rear region of said assemblable storage unit.

12. An assemblable storage unit as claimed in claim 11 wherein at least one of said pairs of castors is disposed from said assemblable storage unit to be displaced into at least two conditions to provide at least a first and second angular orientation of said first and second upwardly support able members in respect of said substantially horizonal surface.

13. An assemblable storage unit as claimed in 1 wherein said first upwardly supportable member and said second upwardly supportable member each comprise of
a forwardly disposed elongate member,
a rearwardly disposed elongate member,
at least one spacer element extending between said forwardly disposed elongate member and said rearwardly disposed elongate member of each upwardly supportable member to keep them in a spaced and fixed relationship to each other.

14. An assemblable storage unit as claimed in claim 13 wherein said spacer elements keep said forwardly disposed and rearwardly disposed elongate members in a substantially parallel condition to each other.

15. An assemblable storage unit as claimed in claim 14 wherein each of said forwardly disposed and rearwardly disposed elongate members of each of said first upwardly supportable member and of said second upwardly supportable member are extruded members each providing a plurality of indexing points to allow the selectable indexing of said elongate members to positions to depend therefrom in desirable locations.

16. An assemblable storage unit as claimed in claim 1 wherein when at least one of said arrays is of three elongate members configured to provide three point support to each of said at least one kind of storage media,
a first of said elongate members is located towards the front region of said storage unit positioned to correspond with a region of said storage media to bear thereon,
a second of said elongate member of said three elongate members located towards the rear region of said assemblable storage unit positioned to correspond with a region of said storage media to bear there against, and
an intermediate elongate member of said three elongate members is positioned to correspond with
(a) a region of said storage media to bear there on in a first orientation of said media or,
(b) a region of said storage media to bear there against in a second orientation of said media

17. An assemblable storage unit as claimed in claim 1 wherein said first upwardly supportable member and said second upwardly supportable member each have at least one region adapted to allow said assemblable storage unit to be secured to a substantially vertical surface.

18. An assemblable storage unit as claimed in claim 15 wherein said indexing points are an array of holes spaced between the distal end of said upright supporting means and are engageable by a securing means of said elongate members.

19. An assemblable storage unit as claimed in claim 18 wherein said array of holes are equi-spaced along a flange of each of the forwardly and rearwardly disposed elongate members of each of the elongate supporting members.
